# EUROPÄISCHE PATENTSCHRIFT

(11) **EP 4 451 070 B1**
(45) Veröffentlichungstag und Bekanntmachung des Hinweises auf die Patenterteilung: **31.12.2025**
(21) Anmeldenummer: 23169001.7
(22) Anmeldetag: 20.04.2023
(51) Int. Cl.: G05B 19/042

(54) **ÜBERWACHUNGSSYSTEM UND VERFAHREN ZUM BETRIEB DESSELBEN**
MONITORING SYSTEM AND METHOD OF ITS OPERATION
SYSTÈME DE SURVEILLANCE ET PROCÉDÉ DE SON FONCTIONNEMENT

(43) Veröffentlichungstag der Anmeldung: 23.10.2024
(73) Patentinhaber: Siemens Aktiengesellschaft, 80333 München (DE)
(72) Erfinder: Walter, Maximilian, 90408 Nürnberg (DE); Kahabka, Thomas, 91224 Pommelsbrunn (DE)
(74) Vertreter: Siemens Patent Attorneys

(56) Entgegenhaltungen:
- EP-A1- 3 709 106
- US-A1- 2011 029 278

## Beschreibung

Die Erfindung betrifft ein Überwachungssystem umfassend
- einen ersten Personendetektor, welcher ausgestaltet ist,
- eine erste Positionsangabe einer in einem Überwachungsbereich erkannten Person über einen ersten Kanal auszugeben,
- einen zweiten Personendetektor, welcher ausgestaltet ist,
- eine zweite Positionsangabe der in dem Überwachungsbereich erkannten Person über einen zweiten Kanal auszugeben,
- eine Diagnoseeinheit mit einem
   - ersten Eingang um die erste Positionsangabe zu empfangen, einem
   - zweiten Eingang um die zweite Positionsangabe zu empfangen weiterhin mit einem
   - ersten Ausgang für eine geprüfte Positionsangabe der erkannten Person und
   - einem zweiten Ausgang für ein Fehlersignal und
wobei die Diagnoseeinheit ausgestaltet ist die erste Positionsangabe und die zweite Positionsangabe auf Plausibilität zu prüfen, und für den Fall, das die erste Positionsangabe und die zweite Positionsangabe zueinander plausibel sind diese als die geprüfte Positionsangabe auszugeben, weiterhin ausgestaltet für den Fall, dass wenn die Plausibilitätsprüfung fehlschlägt einen Fehler zu erkennen und das Fehlersignal am zweiten Ausgang auszugeben.

Im Sinne der Erfindung wird unter fehlersicherer Automatisierungssysteme ein Industriecontroller verstanden, welcher nach der Norm IEC62061 zertifiziert ist und damit als eine auf funktionale Sicherheit ausgelegte Steuerung ausgestaltet ist.

Fehlersichere Automatisierungssysteme steuern Prozesse, die als Ergebnis von unerwartetem Betriebsverhalten oder eines Ausfalls sofort einen sicheren Zustand einnehmen können. Dies sind fehlersichere Steuerungsprozesse, bei denen ein sofortiges Herunterfahren in einen sicheren Zustand keine Gefahr für Menschen oder die Umwelt darstellt. Fehlersichere Systeme gehen über das herkömmliche Sicherheits-Engineering hinaus und aktivieren weitreichende intelligente Systeme, die bis zu den elektrischen Antrieben und Messsystemen reichen. Der Anwender setzt fehlersichere Systeme in Anwendungen mit erhöhten Sicherheitsanforderungen ein. Dank der verbesserten Fehlererkennung und -lokalisierung in fehlersicheren Systemen mittels detaillierter Diagnoseinformationen kann die Produktion nach einer sicherheitsbezogenen Unterbrechung schnell wieder aufgenommen werden.

Die nach dem Stand der Technik bekannten Personendetektoren erreichen heute bereits eine sehr hohe Qualität und werden mit fehlersicheren Automatisierungsgeräten ausgewertet. Allerdings werden Anforderungen, die sich aus dem Kontext der "funktionalen Sicherheit" ergeben, nicht erfüllt. Zu diesen Anforderungen zählt eine sichere Diagnose, die alle denkbaren Fehler in einem Überwachungssystem und deren Subsystemen, wie z.B. Kameras, Laserscanner, künstliche Neuronale Netzwerke, Kommunikationsstrecken, usw. aufdeckt. Darum werden die Personendetektoren zweikanalig ausgestaltet und die Positionsangabe des ersten Kanals wird mit der Positionsangabe des zweiten Kanals auf Plausibilität geprüft.

Für den Fall, dass bei mindestens einem der beiden Kanäle ein Fehler diagnostiziert wird, wird dies durch das Fehlersignal "Failure Detected" signalisiert. Dadurch wird die nachfolgende Entscheidungsfindung veranlasst, einen sicheren Zustand einzunehmen (z.B. sofortiges Abschalten der Maschine). Neben tatsächlichen Fehlern (z.B. Ausfall einer Kamera), kann diese Diagnose auch durch Fehlverhalten der Benutzer ausgelöst werden, z.B. wenn ein Benutzer hinter einem Objekt verschwindet, oder wenn er eine Pose einnimmt, in der er als Person zumindest von einem Personendetektor nicht mehr erkennbar ist. In diesen Fällen kommt es zu einem unnötigen Auslösen der Sicherheitsfunktion, die die Anlagenverfügbarkeit verschlechtert.

Die US 2011/029278 A1 und die EP 3 709 106 A1 zeigen jeweils ein Überwachungssystem gemäß dem Oberbegriff des Anspruchs 1.

Es ist demnach eine Aufgabe der Erfindung, die Anlagenverfügbarkeit zu erhöhen.

Die Aufgabe wird dadurch gelöst, dass die Diagnoseeinheit des eingangs genannten Überwachungssystems einen Speicher für eine Positionstoleranz aufweist, welche über einen dritten Ausgang ausgebbar ist, und ausgestaltet ist, für den Fall der fehlgeschlagenen Plausibilitätsprüfung die zuletzt geprüfte Positionsangabe als ein Mittelpunkt eines Kreises oder einer Kugel und die Positionstoleranz als Radius des Kreises oder der Kugel anzusehen und eine daraus resultierende Kreisfläche bzw. Sphäre zu berechnen, wobei die Punkte der Kreisfläche oder der Sphäre am ersten Ausgang als mögliche Ersatz-Positionsangabe ausgegeben werden,
weiterhin aufweisend
eine Entscheidungseinheit, welche mit dem ersten Ausgang, dem zweiten Ausgang und dem dritten Ausgang in Verbindung steht und eine Maschinenliste aufweist, in welcher zumindest für eine erste Maschine ein Maschinenstandort und ein Schutzradius um den Maschinenstandort angeben ist,
weiterhin ist die Entscheidungseinheit ausgestaltet im Fall der Kreisfläche die daraus resultierenden Punkte der Kreislinie als ungünstigste Aufenthaltsorte der erkannten Person zu werten und im Fall der Kugel die daraus resultierenden Punkte der Kugelfläche als ungünstigste Aufenthaltsorte der erkannten Person zu werten,
weiterhin ausgestaltet mit den ungünstigsten Aufenthaltsorten und den Daten des Maschinenstandortes mit seinem Schutzradius einen Abstand der ungünstigsten Aufenthaltsorte zu einer
durch den Schutzradius der ersten Maschine gebildeten Begrenzungslinie oder Begrenzungsfläche zu ermitteln und bei Unterschreiten eines Mindestabstands eine Sicherheitsfunktion für die Maschine auszulösen.

Erfindungsgemäß wird vorgeschlagen, die bekannte Diagnoseeinheit um einen Ausgang für eine Angabe zur Positionstoleranz "Error bound" oder Fehlergrenze zu erweitern. Dieser gibt den maximalen Fehler in der ausgegebenen geprüften Position "Checked Positions" in beispielsweise in Metern an. Handelt es sich bei dem Ausgang "Checked Positions" z.B. um eine Menge von 3D-Vektoren (x,y,z für jede Person), und bei "Error bound" um ein Skalar pro Person, dann befinden sich die Personen jeweils mit Sicherheit in den Kugeln um die durch "Checked Positions" gegebenen Mittelpunkte, deren Radius der jeweiligen "Error bound" entspricht. Bei den Ausgängen "Checked Positions" kann es sich auch um 2D Koordinaten handeln, nämlich der Position der Personen am Boden, in diesem Fall werden aus den Kugeln Kreise. Ebenso ist es möglich, für "Error bound" ebenfalls einen Vektor anzugeben passend zu "Checked Position" entweder in zwei Dimensionen oder in drei Dimensionen, in diesem Fall wird aus der Kugel ein Quader (3D) bzw. aus dem Kreis ein Rechteck (2D).

Im Folgenden wird allgemein von einer "Safety Bubble" gesprochen, bei der es sich je nach Ausprägung um eine Kugel, Kreis, Quader oder Rechteck handeln kann. Im fehlerfreien Fall entspricht der Wert von "Error bound" der bauartbedingten absoluten Genauigkeit des Personendetektors. Z.B. könnte diese fest 0.5m betragen. Eine andere Möglichkeit besteht darin, dass die Genauigkeit des Personendetektors von der Entfernung der Person zur Kamera oder allgemeiner von der Position der Person abhängt. Da die Diagnoseeinheit diese Position kennt, kann sie die Genauigkeit zur Laufzeit ermitteln und entsprechend angeben.

Tritt ein Fehler auf, der dazu führt, dass die Position einer Person von zumindest einem Kanal nicht mehr ermittelt werden kann (z.B., weil die Person hinter einem Objekt verschwunden ist), wird der Ausgang "Failure detected" gesetzt. Die nachfolgende Entscheidungseinheit "Decision Making"-Einheit, welche in klassischer sicherer Technik realisiert ist, kann nun anhand der Umstände entscheiden, ob das Abschalten von Maschinen notwendig ist oder nicht. Ist z.B. der Abstand aller gefährlichen Maschinen auch unter Berücksichtigung der "Error bound" groß genug, kann die Einheit entscheiden, den Betrieb fortzusetzen, auch wenn die exakte Position einer Person nicht bekannt ist. Die Verfügbarkeit der Anlage wird dadurch entscheidend verbessert. Schwerwiegende Fehler (z.B. Ausfall beider Kanäle, oder nachgewiesenes Hardware-Problem in einem der beiden Kanäle) kann die Diagnoseeinheit nach wie vor anzeigen, indem die beispielweise den "Error bound" auf einen sehr großen Wert setzt. Alternativ ist neben dem Ausgang "Error Detected" ein weiterer Boolescher Ausgang "Fatal Error Detector" denkbar.

In einer weiter verbesserten Ausgestaltung des Überwachungssystems ist die Diagnoseeinheit ausgestaltet die Positionstoleranz abhängig von der Zeit zu erhöhen, dazu ist in der Diagnoseeinheit ein Zeitzähler vorhanden, welcher bei Setzten des Fehlersignals gestartet wird, weiterhin ausgestaltet den Zeitzähler abzufragen und jeweils nach Erreichen eines vorgebbaren Zeitschrittes die Positionstoleranz, um ein vorgebbares Maß zu erweitern.

Üblicherweise wird in der Sicherheitstechnik davon ausgegangen, dass sich Personen in Fabriken mit einer Geschwindigkeit von maximal 2m/s bewegen. Deshalb kann die Diagnoseeinheit weiterhin eine sinnvolle "Checked Position" ausgeben, indem sie die zuletzt bekannte "Checked Position" mit angepasster Positionstoleranz liefert. Die Positionstoleranz wird abhängig von der Zeit, die die Person nicht sichtbar ist, erhöht. Beispielweise wird die Positionstoleranz um den Wert 0,2m erhöht, wenn die Person für 100ms nicht sichtbar ist.

Auch wenn das System objektiv sicher realisiert ist, kann für die Benutzer ein subjektives Gefühl der Unsicherheit entstehen, da die Funktionsweise des Systems nicht unmittelbar nachvollziehbar ist. Durch die Arbeit in der Nähe einer gefährlichen Maschine ohne physische Trennung (z.B. Schutzzaun) entsteht so u.U. eine dauerhafte Stressbelastung mit entsprechenden negativen Folgen für die Gesundheit.

Dazu weist das Überwachungssystem, weiterhin zumindest einen Projektor auf, welcher ausgestaltet ist, die Kreisfläche bzw. die Sphäre auf einen Boden des Überwachungsbereich (bzw. in den Überwachungsbereich (FOV) zu projizieren, wobei die Entscheidungseinheit ausgestaltet ist dem Projektor die Projektionsdaten bereitzustellen.

Die Personen werden so fortlaufend darüber informiert, dass die Sicherheitsfunktion aktiv ist, und sie können sich fortlaufend davon überzeugen, dass ihre Position korrekt erfasst wird.

Noch besser ist es wenn der Projektor mit der Entscheidungseinheit ausgestaltet ist in einem fehlerfreien Fall eine erste Kreisfläche um die geprüfte Positionsangabe der erkannten Person zu projizieren um der erkannten Person eine Rückmeldung über das sichere Erkennen seiner Position zugeben, weiterhin in einem Fehlerfall eine zweite Kreisfläche um die letzte geprüfte Positionsangabe mit Hilfe der Ersatz-Positionsangabe der erkannten Person zu projizieren um der erkannten Person eine Rückmeldung über die Positionen zu geben, die die Person in absehbarer Zeit noch betreten darf, ohne die Sicherheitsfunktion auszulösen.

Es ist demnach jetzt möglich, dass die von der Entscheidungsfindung bestimmte "Safety-Bubble", bzw. der Kreis, der entsteht, wenn die "Safety-Bubble" auf den Boden projiziert wird, den betroffenen Personen fortlaufend visuell mitgeteilt wird. Dies erfolgt unter Verwendung der Projektoren, die z.B. an der Decke neben den Kameras angebracht sein können. Zu diesem Zweck sendet ein fehlersicheres Automatisierungssysteme die entsprechende Bildinformation oder Projektionsdaten an den relevanten Projektor bzw. and die relevanten Projektoren.

Diese Bildinformation umfassen dann eine innere Safety-Bubble, die die Position enthält, in der sich die Person zur Zeit befindet. Diese Information wird z.B. dazu benutzt, Maschinen anzuhalten, wenn eine vorgegebene Distanz unterschritten wird. Weiterhin umfassen die Bildinformationen eine größere, äußere Safety-Bubble, die die Positionen umfasst, die die Person in absehbarer Zeit betreten könnte. Diese Information wird z.B. dazu benutzt, Maschinen mit verminderter Geschwindigkeit, d.h. bremsbereit, zu fahren, wenn eine vorgegebene Distanz zu dieser Safety-Bubble unterschritten wird.

Das Anzeigen dieser Safety Bubbles bietet gegenüber der reinen Berechnung und Auswertung in der Sicherheitsfunktion folgende Vorteile:
Die Personen werden fortlaufend darüber informiert, dass die Sicherheitsfunktion aktiv ist, und sie können sich fortlaufend davon überzeugen, dass ihre Position korrekt erfasst wird. Dadurch verbessert sich das subjektive Sicherheitsempfinden entscheidend, und die Stressbelastung wird reduziert.

Die Personen können auf einen Bick erfassen, wie nah sie sich bestimmten Maschinen nähern können, ohne eine Reduktion deren Geschwindigkeit bzw. ein Anhalten der Maschine zu provozieren. Dadurch wird ein unerwünschtes Auslösen der Sicherheitsfunktion vermieden, und die Anlagenverfügbarkeit wird erhöht.

Für den Fall, dass eine Person nicht mehr lokalisiert werden kann, wird dies durch ein Anschwellen der Safety-Bubble (mit einer Geschwindigkeit von 2m pro Sekunde) unmittelbar sichtbar. Die Person kann dann Maßnahmen ergreifen, um ein Anhalten von Maschinen zu vermeiden. Ist die mangelnde Lokalisierbarkeit z.B. durch ein Hindernis verursacht, wäre es der Person z.B. möglich, hinter dem Hindernis hervorzutreten. In diesem Fall könnte die Person wieder exakt lokalisiert werden, die Safety-Bubble schrumpft zu ihrer normalen Größe zusammen, und ein Anlagenstillstand wird vermieden.

Eine weitere Verbesserung besteht darin, akustische Warnsignale einzusetzen, wenn die Safety-Bubble eine bestimmte Größe überschreitet, um die Personen auf einen potenziell bevorstehenden Anlagenstillstand hinzuweisen.

Bei tatsächlichem Ausfall des Personendetektors (z.B. Verlust einer Kamera) wird auch das Hervortreten hinter einem Hindernis das Anschwellen der Safety-Bubble nicht stoppen. In diesem Fall wird vorgeschlagen, in der Fabrikhalle in regelmäßigen Abständen "Sichere Plätze" vorzusehen, die einen sicheren Abstand zu allen gefährlichen Maschinen haben. An diesen Plätzen können Quittierungsschalter angebracht sein. Begibt sich eine Person nach Ertönen des Warnsignals zu einem solchen Platz und betätigt den Quittiertaster, erhält das System dadurch indirekt die exakte Position der Person, und ein Anlagenstillstand wird vermieden. Insbesondere ist es sinnvoll, die "sicheren Plätze" an den Ausgängen der Halle anzubringen, damit die Personen die Halle nach Betätigung der Quittiertaster verlassen können, ohne einen neuen Alarm auszulösen.

In bestimmten Fällen können diese Quittiertaster auch tragbar ausgeführt werden. Z.B. könnte in einer Fertigungszelle ein mobiles Teach-Panel angebracht sein, das über einen sicheren Zustimmtaster verfügt. Unter der Annahme, dass das Kabel des Touch-Panels eine feste Länge hat, weist das Drücken des Zustimmtasters nach, dass sich eine Person innerhalb der Zelle befindet. Gleichzeitig bestätigt der Anwender durch Drücken des Tasters, dass sich die in der Zelle befindlichen Maschinen langsam bewegen dürfen. Dieses Szenerio ist inbesondere dann sinnvoll, wenn damit zu rechnen ist, dass eine Person in bestimmten Bereichen nur schwer zu lokalisieren ist, z.B. weil diese mittels Kameras nur schlecht einsehbar sind.

Des Eingangs genannte Aufgabe wird ebenfalls durch ein Verfahren zum Betrieb eines Überwachungssystems zum Erkennen einer Position einer Person dadurch gelöst, dass mit einem ersten Personendetektor eine erste Positionsangabe der in einem Überwachungsbereich erkannten Person über einen ersten Kanal ausgegeben wird, und
mit einem zweiten Personendetektor eine zweite Positionsangabe der in dem Überwachungsbereich erkannten Person über einen zweiten Kanal ausgegeben wird,
die erste Positionsangabe und die zweite Positionsangabe auf Plausibilität geprüft wird, und für den Fall, das die erste Positionsangabe und die zweite Positionsangabe zueinander plausibel sind wird diese als eine geprüfte Positionsangabe bereitgestellt weiterhin ausgestaltet für den Fall, dass wenn die Plausibilitätsprüfung fehlschlägt einen Fehler zu erkennen und das Fehlersignal am zweiten Ausgang auszugeben wobei mittels einer vorgebbaren Positionstoleranz, für den Fall der fehlgeschlagenen Plausibilitätsprüfung die zuletzt geprüfte Positionsangabe als ein Mittelpunkt eines Kreises oder einer Kugel und die Positionstoleranz als Radius des Kreises oder der Kugel festgelegt wird und eine daraus resultierende Kreisfläche bzw. Sphäre berechnet wird, wobei die Punkte der Kreisfläche oder der Sphäre als mögliche Ersatz-Positionsangabe bereitgestellt werden,
weiterhin wird mittels einer Maschinenliste, in welcher zumindest für eine erste Maschine ein Maschinenstandort und ein Schutzradius um den Maschinenstandort angegeben wird, für den Fall der Kreisfläche werden die daraus resultierenden Punkte der Kreislinie als ungünstigste Aufenthaltsorte der erkannten Person gewertet und im Fall der Kugel werden die daraus resultierenden Punkte der Kugelfläche als ungünstigste Aufenthaltsorte der erkannten Person gewertet, mit den ungünstigsten Aufenthaltsorten
und den Daten des Maschinenstandortes mit seinem Schutzradius wird ein Abstand der ungünstigsten Aufenthaltsorte zu einer durch den Schutzradius gebildeten Begrenzungslinie oder Begrenzungsfläche ermittelt und bei Unterschreiten eines Mindestabstandes wird eine Sicherheitsfunktion für die Maschine ausgelöst.

Um die Anlagenverfügbarkeit weiter zu erhöhen, wird die Positionstoleranz abhängig von der Zeit erhöht wird, dazu wird ein Zeitzähler bei dem Setzten des Fehlersignals gestartet, der Zeitzähler wird sodann zyklisch abgefragt und jeweils nach Erreichen eines vorgebbaren Zeitschrittes wird die Positionstoleranz um ein vorgebbares Maß erweitert.

Um dem Personal mehr Sicherheit zu geben, wird ein Projektor derart betrieben, dass die Kreisfläche bzw. die Sphäre auf einen Boden des Überwachungsbereichs bzw. in den Überwachungsbereich projiziert wird.

Auch kann der Projektor derart mit Projektionsdaten versorgt werden, das in einem fehlerfreien Fall eine erste Kreisfläche um die geprüfte Positionsangabe der erkannten Person projiziert wird und damit der erkannten Person eine Rückmeldung über das sichere Erkennen seiner Position gegeben wird, weiterhin wird in einem Fehlerfall eine zweite Kreisfläche um die letzte geprüfte Positionsangabe mit Hilfe der Ersatz-Positionsangabe der erkannten Person projiziert um der erkannten Person eine Rückmeldung über die Positionen zu geben, die die Person in absehbarer Zeit noch betreten darf ohne die Sicherheitsfunktion auszulösen.

Der enorme Vorteil gegenüber bekannten Verfahren ist, dass den zu erkennenden Personen eine fortlaufende, visuelle Rückmeldung gegeben wird, ob bzw. wo sie vom System gerade erkannt werden. Daraus ergibt sich zum einen eine Erhöhung des subjektiven Sicherheitsempfindens, und dadurch eine Reduktion von Stress. Weiterhin wird den Personen die Möglichkeit gegeben, bei einem großen Teil von Fehlern, bzw. bei einer Fehlerbenutzung des Systems, Gegenmaßnahmen zu ergreifen, um einen Anlagenstillstand zu vermeiden. Dadurch wird die Anlagenverfügbarkeit entscheidend erhöht.

Die Zeichnung zeigt ein Ausführungsbeispiel und Ausgestaltungen der Erfindung. Dabei zeigt die
- FIG 1: ein Überwachungssystem in einer zweikanaligen Ausgestaltung,
- FIG 2: schematische Darstellung von Personen, welche sich einer Maschine annähern,
- FIG 3: eine zeitlich abhängige Erhöhung der Positionstoleranz und
- FIG 4: ein Überwachungssystem mit mehreren Detektoren und Projektoren.

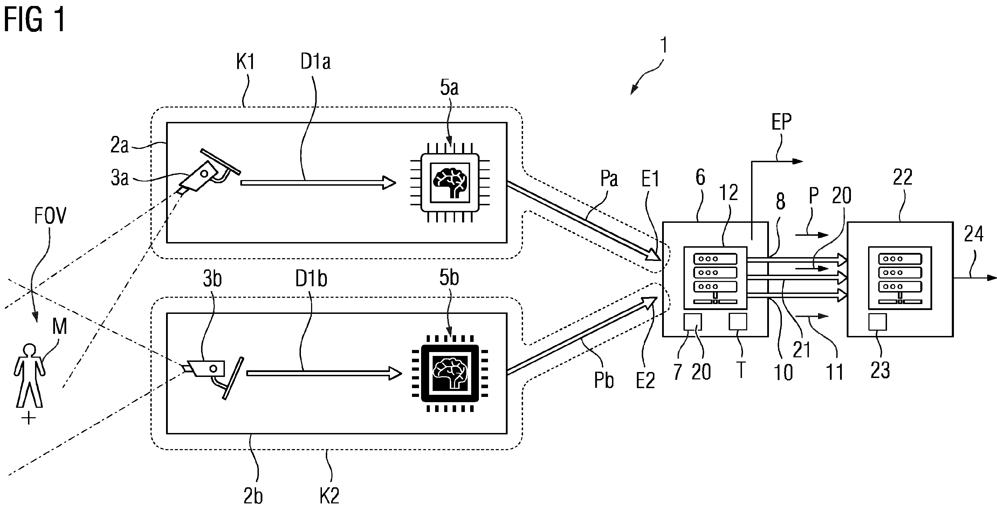

Gemäß FIG 1 ist ein Überwachungssystem 1 mit einem ersten Personendetektor 2a und einem zweiten Personendetektor 2b dargestellt. Die Personendetektoren 2a,2b sind ausgestaltet eine erste Positionsangabe Pa und eine zweite Positionsangabe Pb einer in einem Überwachungsbereich FOV erkannten Person M über einen ersten Kanal K1 bzw. einen zweiten Kanal K2 auszugeben. Eine Diagnoseeinheit 6 hat einen ersten Eingang E1, um die erste Positionsangabe Pa zu empfangen und einen zweiten Eingang E2, um die zweite Positionsangabe Pb zu empfangen, weiterhin ist ein erster Ausgang 8 für eine geprüfte Positionsangabe P der erkannten Person M und ein zweiter Ausgang 10 für ein Fehlersignal 11 vorhanden.

Die Diagnoseeinheit 6 ist ausgestaltet die erste Positionsangabe Pa und die zweite Positionsangabe Pb auf Plausibilität zu prüfen, und für den Fall, das die erste Positionsangabe Pa und die zweite Positionsangabe Pb zueinander plausibel sind diese als die geprüfte Positionsangabe P auszugeben. Für den Fall, dass, wenn die Plausibilitätsprüfung fehlschlägt, ist die Diagnoseeinheit 6 ausgestaltet, einen Fehler zu erkennen und das Fehlersignal 11 am zweiten Ausgang 10 auszugeben. Die Diagnoseeinheit 6 ist weiterhin ausgestaltet mit einer Prüfeinheit 12 die Ausgabe der Positionsangabe P der erkannten Person M mit, vorzugsweise einer Mehrzahl an, Plausibilitätskriterien auf Plausibilität zu überprüfen. Weiterhin ausgestaltet für den Fall, dass wenn die Plausibilitätsprüfung fehlschlägt einen Fehler zu erkennen und das Fehlersignal 11 am zweiten Ausgang 10 auszugeben.

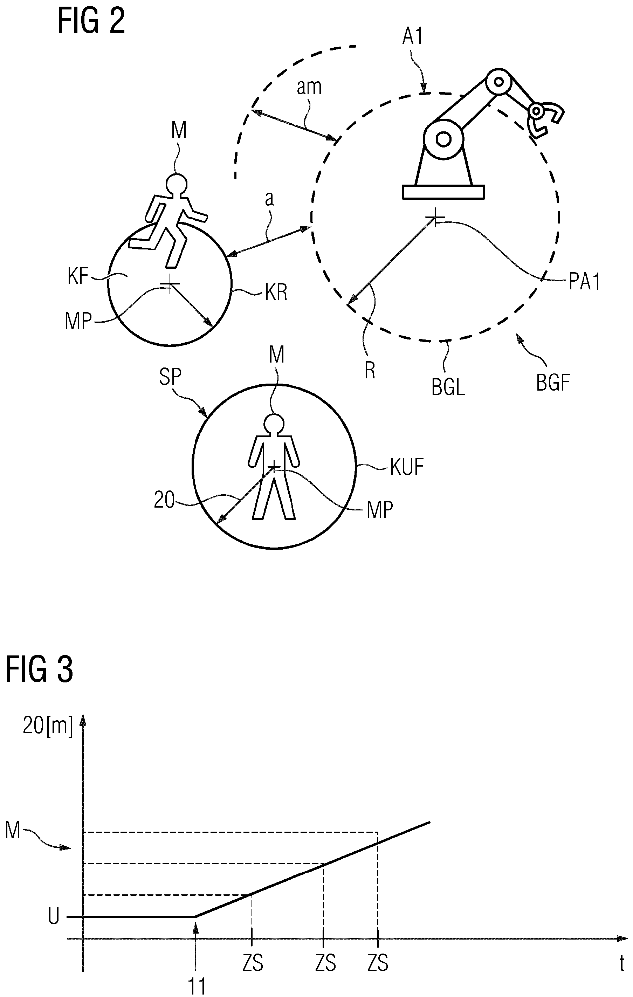

Die Diagnoseeinheit 6 weist einen Speicher 7 für eine Positionstoleranz 20 auf, welche über einen dritten Ausgang 21 ausgebbar ist, und ausgestaltet ist, für den Fall der fehlgeschlagenen Plausibilitätsprüfung die zuletzt geprüfte Positionsangabe P als ein Mittelpunkt MP eines Kreises oder einer Kugel und die Positionstoleranz 20 als Radius des Kreises oder der Kugel anzusehen und eine daraus resultierende Kreisfläche KF bzw. Sphäre SP (sie auch FIG 2) zu berechnen, wobei die Punkte der Kreisfläche oder der Sphäre SP am ersten Ausgang 8 als mögliche Ersatz-Positionsangabe EP ausgegeben werden.

Eine Entscheidungseinheit 22 ist mit dem ersten Ausgang 8, dem zweiten Ausgang 10 und dem dritten Ausgang 21 verbunden und weist eine Maschinenliste 23 auf, in welcher zumindest für eine erste Maschine A1 ein Maschinenstandort PA1 und ein Schutzradius R um den Maschinenstandort PA1 angeben ist.

Weiterhin ist die Entscheidungseinheit 22 ausgestaltet im Fall der Kreisfläche KF die daraus resultierenden Punkte der Kreislinie KR als ungünstigste Aufenthaltsorte der erkannten Person M zu werten und im Fall der Kugel die daraus resultierenden Punkte der Kugelfläche als ungünstigste Aufenthaltsorte der erkannten Person M zu werten.

Mit den ungünstigsten Aufenthaltsorten und den Daten des Maschinenstandortes PA1 mit seinem Schutzradius R kann nun ein Abstand a der ungünstigsten Aufenthaltsorte zu einer durch den Schutzradius R der ersten Maschine A1 gebildeten Begrenzungslinie BGL oder Begrenzungsfläche BGF ermittelt werden und bei Unterschreiten eines Mindestabstands am eine Sicherheitsfunktion 24 für die Maschine A1 ausgelöst werden.

Die Diagnoseeinheit 6 ist ausgestaltet die Positionstoleranz 20 abhängig von der Zeit t zu erhöhen (siehe auch FIG 3), dazu ist in der Diagnoseeinheit 6 ein Zeitzähler T in einem Speicher 10 vorhanden, welcher bei Setzen des Fehlersignals 11 gestartet wird. Dabei ist die Diagnoseeinheit 6 dazu ausgestaltet den Zeitzähler T abzufragen und jeweils nach Erreichen eines vorgebbaren Zeitschrittes ZS die Positionstoleranz 20 um ein vorgebbares Maß M zu erweitern.

Der erste Kanal K1 weist im Wesentlichen zwei Komponenten auf. Eine erste Komponente bildet eine erste Kamera 3a und eine zweite Komponente bildet eine erste Auswerteeinheit 5a.

Zwecks der Sicherheit weist der zweite Kanal K2 im Wesentlichen auch zwei Komponenten auf. Eine erste Komponente bildet eine zweite Kamera 3b und eine zweite Komponente bildet eine zweite Auswerteeinheit 5b.

Der erste Personendetektor 2a weist die erste Kamera 3a zur Aufnahme von digitalen Bilddateien D1a auf. Optional kann der Personendetektor 2a auch ein Laser-Sensor-System zur Aufnahme von Punktewolken aufweisen. Die erste Auswerteeinheit 5a ist ausgestaltet, die Bilddateien D1a oder die Punktewolken auszuwerten und eine Positionsangabe Pa einer in einem Überwachungsbereich FOV erkannten Person M auszugeben.

Die zweite Auswerteeinheit 5b ist ausgestaltet, die Bilddateien D1b oder die Punktewolken auszuwerten und eine Positionsangabe Pb einer in dem Überwachungsbereich FOV erkannten Person M auszugeben.

Vorteilhafterweise verfügen die einzelnen Kanäle über einen möglichst hohen Grad an Diversität. Z.B.:
a) Die Kameras der einzelnen Kanäle betrachten die Szene aus unterschiedlichen Blickwinkeln, z.B. von der Seite (Wandmontage) und von oben (Deckenmontage).
b) Es werden Kameras und künstliche neuronale Netzwerkhardware verschiedener Hersteller verwendet.
c) Die auf den künstlichen neuronalen Netzen laufenden Modelle wurden mit unterschiedlichen Trainingsdaten trainiert und getestet.
d) Die auf den künstlichen neuronalen Netzwerken laufenden Modelle zur Objekterkennung sind unterschiedlich (z.B. YOLO, versus FairMOT).
e) Es werden unterschiedliche Messprinzipien eingesetzt, z.B. RGB-Kamera versus Infrarotkamera, Eventkamera versus Framekamera, Kamera versus Radar etc.

Durch die Diversität lassen sich nicht nur zufällige Hardwarefehler, sondern auch systematische Fehler erkennen.

Gemäß FIG 2 ist eine Maschine A1 an einem Maschinenstandort PA1 aufgestellt. Ausgehend vom Maschinenstandort PA1, welcher den Mittelpunkt einer Kreisfläche oder einer Kugel darstellt, bildet sich mit dem Schutzradius R eine Kreisfläche mit einer Begrenzungslinie BGL oder eine Kugel mit einer Begrenzungsfläche BGF um den Maschinenstandort PA1 herum. Eine Person M befindet sich in einer Kreisfläche KF und steht auf dem Mittelpunkt MP der Kreisfläche KF. Die aus der Kreisfläche KF resultierenden Punkte der Kreislinie KR werden in einem Fehlerfall als ungünstigste Aufenthaltsorte der erkannten Person gewertet.

Mit den ungünstigsten Aufenthaltsorten und den Daten des Maschinenstandortes PA1 mit seinem Schutzradius R wird ein Abstand a der ungünstigsten Aufenthaltsorte zu der durch den Schutzradius R gebildeten Begrenzungslinie BGL oder der Begrenzungsfläche BGF ermittelt und bei Unterschreiten eines Mindestabstandes am wird eine Sicherheitsfunktion 24 für die Maschine A1 ausgelöst. Auch kann es sein, dass sich rund um eine Person M mit einem weiteren Mittelpunkt MP eine Schutzblase bildet, mit einer Sphäre SP die Schutzblase hat ausgehend von dem Mittelpunkt MP der Person M den Radius der Positionstoleranz 20 und die Oberfläche der Kugel ist die Kugelfläche KUF.

Mit der FIG 3 ist gezeigt, dass die Positionstoleranz 20 abhängig von der Zeit t erhöht wird, dazu wird ein Zeitzähler T bei dem Setzen des Fehlersignals 11 gestartet, der Zeitzähler T wird dann zyklisch abgefragt und jeweils nach Erreichen eines vorgebbaren Zeitschrittes ZS wird die Positionstoleranz 20 um ein vorgebbares Maß Ma erhöht. Die Positionstoleranz 20 startet bei einer Messungenauigkeit U, welche vom System vorgegeben ist.

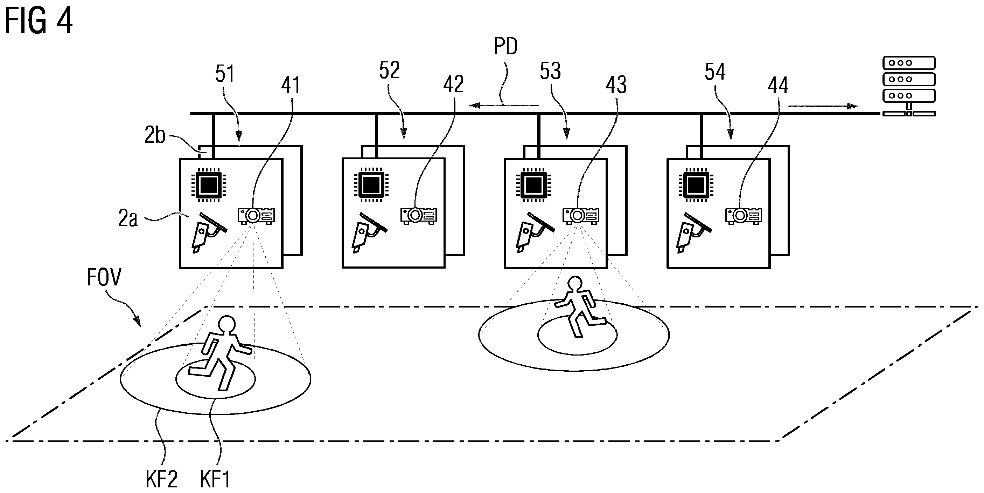

Gemäß FIG 4 ist eine Arbeitsfläche dargestellt, auf der Personen herumlaufen können. Es gibt eine erste Einrichtung 51 mit dem ersten und zweiten Personendetektor 2a, 2b, eine zweite Einrichtung 52 auch mit zwei Personendetektoren, eine dritte Einrichtung 53 ebenfalls mit zwei Personendetektoren und eine vierte Einrichtung 54 auch in zwei Kanäle Ausstattung mit zwei Personendetektoren. Die Einrichtungen 51 bis 54 weisen jeweils einen Projektor 41 bis 44 auf.

In dem Überwachungsbereich FOV befindet sich eine Person M, welche von dem ersten Personendetektor 2a und den zweiten Personendetektor 2b sicher erfasst wird. Um der Person M eine Rückmeldung der sicheren Erfassung zu geben, projiziert der erste Projektor 51 eine innere Kreisfläche KF1 auf den Boden des Überwachungsbereichs FOV. Sollten die beiden Ergebnisse der Positionen den Personendetektoren 2a, 2b nicht mehr plausibel sein, so wird mit dem ersten Projektor 41 eine zweite etwas größere Kreisfläche KF2 um die Person projiziert.

## Patentansprüche

1. Überwachungssystem (1) umfassend
- einen ersten Personendetektor (2a), welcher ausgestaltet ist
- eine erste Positionsangabe (Pa) einer in einem Überwachungsbereich (FOV) erkannten Person (M) über einen ersten Kanal (K1) auszugeben,
- einen zweiten Personendetektor (2b), welcher ausgestaltet ist eine zweite Positionsangabe (Pb) der in dem Überwachungsbereich (FOV) erkannten Person (M) über einen zweiten Kanal (K2) auszugeben,
- eine Diagnoseeinheit (6) mit einem
• ersten Eingang (E1) um die erste Positionsangabe (Pa) zu empfangen, einem
• zweiten Eingang (E2) um die zweite Positionsangabe (Pb) zu empfangen weiterhin mit einem
• ersten Ausgang (8) für eine geprüfte Positionsangabe (P) der erkannten Person (M) und
• einem zweiten Ausgang (10) für ein Fehlersignal (11) und
wobei die Diagnoseeinheit (6) ausgestaltet ist die erste Positionsangabe (Pa) und die zweite Positionsangabe (Pb) auf Plausibilität zu prüfen, und für den Fall, das die erste Positionsangabe (Pa) und die zweite Positionsangabe (Pb) zueinander plausibel sind diese als die geprüfte Positionsangabe (P) auszugeben, weiterhin ausgestaltet für den Fall, dass wenn die Plausibilitätsprüfung fehlschlägt einen Fehler zu erkennen und das Fehlersignal (11) am zweiten Ausgang (10) auszugeben, **dadurch gekennzeichnet, dass** die Diagnoseeinheit (6) einen Speicher (7) für eine Positionstoleranz (20) aufweist, welche über einen dritten Ausgang (21) ausgebbar ist, und ausgestaltet ist, für den Fall der fehlgeschlagenen Plausibilitätsprüfung die zuletzt geprüfte Positionsangabe (P) als ein Mittelpunkt (MP) eines Kreises oder einer Kugel und die Positionstoleranz (20) als Radius des Kreises oder der Kugel anzusehen und eine daraus resultierende Kreisfläche (KF) bzw. Sphäre (SP) zu berechnen, wobei die Punkte der Kreisfläche oder der Sphäre (SP) am ersten Ausgang (8) als mögliche Ersatz-Positionsangabe (EP) ausgegeben werden,
weiterhin aufweisend eine Entscheidungseinheit (22), welche mit dem ersten Ausgang (8), dem zweiten Ausgang (10) und dem dritten Ausgang (21) in Verbindung steht und eine Maschinenliste (23) aufweist, in welcher zumindest für eine erste Maschine (A1) ein Maschinenstandort (PA1) und ein Schutzradius (R) um den Maschinenstandort (PA1) angeben ist,
weiterhin ist die Entscheidungseinheit (22) ausgestaltet im Fall der Kreisfläche (KF) die daraus resultierenden Punkte der Kreislinie (KR) als ungünstigste Aufenthaltsorte der erkannten Person (M) zu werten und im Fall der Kugel die daraus resultierenden Punkte der Kugelfläche als ungünstigste Aufenthaltsorte der erkannten Person (M) zu werten,
weiterhin ausgestaltet mit den ungünstigsten Aufenthaltsorten und den Daten des Maschinenstandortes (PA1) mit seinem Schutzradius (R) einen Abstand (a) der ungünstigsten Aufenthaltsorte zu einer durch den Schutzradius (R) der ersten Maschine gebildeten Begrenzungslinie (BGL) oder Begrenzungsfläche (BGF) zu ermitteln und bei Unterschreiten eines Mindestabstands (am) eine Sicherheitsfunktion (24) für die Maschine (A1) auszulösen.

2. Überwachungssystem (1) nach Anspruch 1, wobei die Diagnoseeinheit (6) ausgestaltet ist die Positionstoleranz (20) abhängig von der Zeit (t) zu erhöhen, dazu ist in der Diagnoseeinheit (6) ein Zeitzähler (T) vorhanden, welcher bei Setzten des Fehlersignals (11) gestartet wird, weiterhin ausgestaltet den Zeitzähler (T) abzufragen und jeweils nach Erreichen eines vorgebbaren Zeitschrittes (ZS) die Positionstoleranz (20) um ein vorgebbares Maß (M) zu erweitern.

3. Überwachungssystem (1) nach Anspruch 1 oder 2, weiterhin aufweisend zumindest einen Projektor (41,42,43,44), welcher ausgestaltet ist die Kreisfläche (KF) bzw. die Sphäre (SP) auf einen Boden des Überwachungsbereich (FOV) bzw. in den Überwachungsbereich (FOV) zu projizieren, wobei die Entscheidungseinheit (22) ausgestaltet ist dem Projektor (41,42,43,44), die Projektionsdaten bereitzustellen.

4. Überwachungssystem (1) nach Anspruch 3, wobei der Projektor mit der Entscheidungseinheit (22) ausgestaltet ist in einem fehlerfreien Fall eine erste Kreisfläche (K1) um die geprüfte Positionsangabe (P) der erkannten Person (M) zu projizieren um der erkannten Person (M) eine Rückmeldung über das sichere Erkennen seiner Position zugeben, weiterhin in einem Fehlerfall eine zweite Kreisfläche (KF2) um die letzte geprüfte Positionsangabe (P) mit Hilfe der Ersatz-Positionsangabe (EP) der erkannten Person (M) zu projizieren um der erkannten Person (M) eine Rückmeldung über die Positionen zu geben, die die Person (M) in absehbarer Zeit noch betreten darf ohne die Sicherheitsfunktion (24) auszulösen.

5. Verfahren zum Betrieb eines Überwachungssystems (1) zum Erkennen einer Position einer Person (M), wobei mit einem ersten Personendetektor (2a) eine erste Positionsangabe (Pa) der in einem Überwachungsbereich (FOV) erkannten Person (M) über einen ersten Kanal (K1) ausgegeben wird, und
mit einem zweiten Personendetektor (2b) eine zweite Positionsangabe (Pb) der in dem Überwachungsbereich (FOV) erkannten Person (M) über einen zweiten Kanal (K2) ausgegeben wird,
die erste Positionsangabe (Pa) und die zweite Positionsangabe (Pb) auf Plausibilität geprüft wird, und für den Fall, das die erste Positionsangabe (Pa) und die zweite Positionsangabe (Pb) zueinander plausibel sind wird diese als eine geprüfte Positionsangabe (P) bereitgestellt weiterhin ausgestaltet für den Fall, dass wenn die Plausibilitätsprüfung fehlschlägt einen Fehler zu erkennen und das Fehlersignal (11) am zweiten Ausgang (10) auszugeben, **dadurch gekennzeichnet, dass** mittels einer vorgebbaren Positionstoleranz (20), für den Fall der fehlgeschlagenen Plausibilitätsprüfung die zuletzt geprüfte Positionsangabe (P) als ein Mittelpunkt (MP) eines Kreises oder einer Kugel und die Positionstoleranz (20) als Radius des Kreises oder der Kugel festgelegt wird und eine daraus resultierende Kreisfläche (KF) bzw. Sphäre (SP) berechnet wird, wobei die Punkte der Kreisfläche (KF) oder der Sphäre (SP) als mögliche Ersatz-Positionsangabe (EP) bereitgestellt werden,
weiterhin wird mittels einer Maschinenliste (23), in welcher zumindest für eine erste Maschine (A1) ein Maschinenstandort (PA1) und ein Schutzradius (R) um den Maschinenstandort (PA1) angegeben wird, für den Fall der Kreisfläche (KF) werden die daraus resultierenden Punkte der Kreislinie (KR) als ungünstigste Aufenthaltsorte der erkannten Person (M) gewertet und im Fall der Kugel werden die daraus resultierenden Punkte der Kugelfläche als ungünstigste Aufenthaltsorte der erkannten Person (M) gewertet, mit den ungünstigsten Aufenthaltsorten und den Daten des Maschinenstandortes (PA1) mit seinem Schutzradius (R) wird ein Abstand (a) der ungünstigsten Aufenthaltsorte zu einer durch den Schutzradius (R) gebildeten Begrenzungslinie (BGL) oder Begrenzungsfläche (BGF) ermittelt und bei Unterschreiten eines Mindestabstandes (am) wird eine Sicherheitsfunktion (24) für die Maschine (A1) ausgelöst.

6. Verfahren nach Anspruch 5, wobei die Positionstoleranz (20) abhängig von der Zeit (t) erhöht wird, dazu wird ein Zeitzähler (T) bei dem Setzten des Fehlersignals (11) gestartet, der Zeitzähler wird sodann zyklisch abgefragt und jeweils nach Erreichen eines vorgebbaren Zeitschrittes (ZS) wird die Positionstoleranz (20) um ein vorgebbares Maß erweitert.

7. Verfahren nach Anspruch 5 oder 6, wobei ein Projektor (41,42,43,44) derart betrieben wird, dass die Kreisfläche (KF) bzw. die Sphäre (SP) auf einen Boden des Überwachungsbereichs (FOV) bzw. in den Überwachungsbereich (FOV) projiziert wird.

8. Verfahren nach Anspruch 7, wobei der Projektor (41,42,43, 44) derart mit Projektionsdaten (PD) versorgt wird, das in einem fehlerfreien Fall eine erste Kreisfläche (K1) um die geprüfte Positionsangabe (P) der erkannten Person (M) projiziert wird und damit der erkannten Person (M) eine Rückmeldung über das sichere Erkennen seiner Position gegeben wird, weiterhin wird in einem Fehlerfall eine zweite Kreisfläche (K2) um die letzte geprüfte Positionsangabe (P) mit Hilfe der Ersatz-Positionsangabe (EP) der erkannten Person (M) projiziert um der erkannten Person (M) eine Rückmeldung über die Positionen zu geben, die die Person (M) in absehbarer Zeit noch betreten darf ohne die Sicherheitsfunktion (24) auszulösen.

## Claims

1. Monitoring system (1), comprising
- a first person detector (2a) which is designed
- to output a first position indicator (Pa) relating to a person (M) identified in a monitoring region (FOV) via a first channel (K1),
- a second person detector (2b) which is designed to output a second position indicator (Pb) relating to the person (M) identified in the monitoring region (FOV) via a second channel (K2), and
- a diagnostic unit (6) having
• a first input (E1) for receiving the first position indicator (Pa),
• a second input (E2) for receiving the second position indicator (Pb), and having
• a first output (8) for a checked position indicator (P) relating to the identified person (M) and
• a second output (10) for an error signal (11), and
wherein the diagnostic unit (6) is designed to check the first position indicator (Pa) and the second position indicator (Pb) in respect of plausibility and to output these as the checked position indicator (P) in the event that the first position indicator (Pa) and the second position indicator (Pb) are reciprocally plausible, and is further designed to identify an error and to output the error signal (11) at the second output (10) in the event that the plausibility check fails,
**characterised in that** the diagnostic unit (6) has a memory (7) for a position tolerance (20) that can be output via a third output (21), and is designed, in the event of a failed plausibility check, to consider the most recently checked position indicator (P) as a centre (MP) of a circle or a ball and the position tolerance (20) as a radius of said circle or ball, and to calculate a resulting circular area (KF) or sphere (SP) therefrom, wherein the points of the circular area or sphere (SP) are output at the first output (8) as a possible substitute position indicator (EP),
further comprising a decision unit (22) that is connected to the first output (8), the second output (10) and the third output (21) and has a machine list (23) in which a machine location (PA1) and a protection radius (R) around the machine location (PA1) are specified at least for a first machine (A1),
and the decision unit (22) is further designed, in the case of the circular area (KF), to rate the resulting points of the circular curve (KR) as least favourable whereabouts of the identified person (M) and, in the case of the ball, to rate the resulting points of the ball surface as least favourable whereabouts of the identified person (M),
and is further designed, using the least favourable whereabouts and the data relating to the machine location (PA1) with its protection radius (R), to determine a distance (a) from the least favourable whereabouts to a boundary line (BGL) or boundary area (BGF) that is formed by the protection radius (R) of the first machine, and to trigger a safety function (24) for the machine (A1) if a minimum distance (am) is not satisfied.

2. Monitoring system (1) according to claim 1, wherein the diagnostic unit (6) is designed to increase the position tolerance (20) as a function of the time (t), a time counter (T) being provided in the diagnostic unit (6) for this purpose and being started when the error signal (11) is set, and is further designed to poll the time counter (T) and to increase the position tolerance (20) by a predeterminable amount (M) in each case after a predeterminable time step (ZS) is reached.

3. Monitoring system (1) according to claim 1 or 2, further comprising at least one projector (41, 42, 43, 44), which is designed to project the circular area (KF) onto a base of the monitoring region (FOV) or the sphere (SP) into the monitoring region (FOV), wherein the decision unit (22) is designed to provide the projection data to the projector (41, 42, 43, 44).

4. Monitoring system (1) according to claim 3, wherein the projector is designed with the decision unit (22) to project, in an error-free case, a first circular area (K1) around the checked position indicator (P) relating to the identified person (M), in order to give the identified person (M) feedback about the safe identification of their position and furthermore, in case of error, to project a second circular area (KF2) around the most recently checked position indicator (P) using the substitute position indicator (EP) relating to the identified person (M), in order to give the identified person (M) feedback about those positions which the person (M) is still allowed to enter within a foreseeable time without triggering the safety function (24).

5. Method for operating a monitoring system (1) for identifying a position of a person (M), wherein
a first position indicator (Pa) relating to the person (M) identified in a monitoring region (FOV) is output via a first channel (K1) by means of a first person detector (2a), and
a second position indicator (Pb) relating to the person (M) identified in the monitoring region (FOV) is output via a second channel (K2) by means of a second person detector (2b), the first position indicator (Pa) and the second position indicator (Pb) are checked for plausibility and in the event that the first position indicator (Pa) and the second position indicator (Pb) are reciprocally plausible these are provided as a checked position indicator (P), and furthermore in the event that the plausibility check fails an error is identified and the error signal (11) is output at the second output (10), **characterised in that** by means of a predeterminable position tolerance (2), in the event that the plausibility check fails, the most recently checked position indicator (P) is defined as a centre (MP) of a circle or a ball and the position tolerance (20) is defined as a radius of the circle or the ball, and a resulting circular area (KF) or sphere (SP) is calculated therefrom, wherein the points of the circular area (KF) or the sphere (SP) are provided as a possible substitute position indicator (EP),
and furthermore by means of a machine list (23) in which a machine location (PA1) and a protection radius (R) around the machine location (PA1) are specified at least for a first machine (A1), in the case of the circular area (KF) the resulting points of the circular curve (KR) are rated as least favourable whereabouts of the identified person (M), and in the case of the ball the resulting points of the ball surface are rated as least favourable whereabouts of the identified person (M), the least favourable whereabouts and the data relating to the machine location (PA1) with its protection radius (R) are used to determine a distance (a) from the least favourable whereabouts to a boundary line (BGL) or boundary area (BGF) that is formed by the protection radius (R), and a safety function (24) for the machine (A1) is triggered if a minimum distance (am) is not satisfied.

6. Method according to claim 5, wherein the position tolerance (20) is increased as a function of the time (t), for which purpose a time counter (T) is started when the error signal (11) is set, the time counter is then polled cyclically and the position tolerance (20) is increased by a predeterminable amount in each case after a predeterminable time step (ZS).

7. Method according to claim 5 or 6, wherein a projector (41, 42, 43, 44) is operated in such a way that the circular area (KF) or the sphere (SP) is projected respectively onto a base of the monitoring region (FOV) or into the monitoring region (FOV) .

8. Method according to claim 7, wherein the projector (41, 42, 43, 44) is supplied with projection data (PD) in such a way that, in an error-free case, a first circular area (K1) is projected around the checked position indicator (P) relating to the identified person (M), thereby providing the identified person (M) with feedback about the safe identification of their position and furthermore, in case of error, a second circular area (K2) is projected around the most recently checked position indicator (P) using the substitute position indicator (EP) relating to the identified person (M), in order to provide the identified person (M) with feedback about those positions which the person (M) is still allowed to enter within a foreseeable time without triggering the safety function (24).

## Revendications

1. Système (1) de surveillance comprenant
- un premier détecteur (2a) de personne, qui est conformé
- pour donner par un premier canal (K1) une première indication (Pa) de position d'une personne (M) identifiée dans une zone (FOV) de surveillance,
- un deuxième détecteur (2b) de personne, qui est conformé pour donner par un deuxième canal (K2) une deuxième indication (Pb) de position de la personne (M) identifiée dans la zone (FOV) de surveillance,
- une unité (6) de diagnostic comprenant
• une première entrée (E1) pour recevoir la première indication (Pa) de position,
• une deuxième entrée (E2) pour recevoir la deuxième entrée (Pb) de position, comprenant en outre
• une première sortie (8) pour une indication (P) de position contrôlée de la personne (M) identifiée et
• une deuxième sortie (10) pour un signal (11) d'erreur et
dans lequel l'unité (6) de diagnostic est conformée pour contrôler la vraisemblance de la première indication (Pa) de position et de la deuxième indication (Pb) de position, et dans le cas où la première indication (Pa) de position et la deuxième indication (Pb) de position sont vraisemblables l'une par rapport à l'autre, les donner comme l'indication (P) de position contrôlée, conformée en outre, dans le cas où, si le contrôle de vraisemblance échoue, identifier une erreur et donner le signal (11) d'erreur à la deuxième sortie (10), **caractérisé en ce que** l'unité (6) de diagnostic a une mémoire (7) pour une tolérance (20) de position, qui peut être donnée par une troisième sortie (21), et est conformée dans le cas de l'échec du contrôle de vraisemblance, considérer l'indication (P) de position contrôlée en dernier comme un centre (MP) d'un cercle ou d'une sphère et considérer la tolérance (20) de position comme le rayon du cercle ou de la sphère et calculer une surface (KF) de cercle ou de sphère (SP) en résultant, dans lequel les points de la surface du cercle ou de la sphère (SP) sont donnés à la première sortie (8) comme indication (EP) de position de remplacement possible,
comportant en outre une unité (22) de prise de décision, qui est en liaison avec la première sortie (8), avec la deuxième sortie (10) et avec la troisième sortie (21) et qui a une liste (23) de machines, dans laquelle au moins pour une première machine (A1), est indiqué un site (PA1) de la machine et un rayon (R) de protection, autour du site (PA1) de la machine,
en outre l'unité (22) de prise de décision est conformée pour, dans le cas de la surface (KF) de cercle, évaluer les points en résultant de la ligne (KR) circulaire comme emplacements de séjour, très défavorables de la personne (M) identifiée et pour évaluer, dans le cas de la sphère, les points en résultant de la surface de la sphère comme emplacements de séjour très défavorables de la personne (M) identifiée,
conformer en outre pour déterminer avec les emplacements de séjour très défavorables et les données du site (PA1) de la machine par son rayon (R) de protection, une distance (a) des emplacements de séjour très défavorables à une ligne (BGL) de démarcation formée par le rayon (R) de protection de la première machine ou à une surface (BGF) de démarcation et pour déclencher une fonction (24) de sécurité pour la machine (A1), si l'on passe en dessous d'une distance (am) minimum.

2. Système (1) de surveillance suivant la revendication 1, dans lequel l'unité (6) de diagnostic est conformée pour augmenter la tolérance (20) de position en fonction du temps (t), à cet effet il est prévu dans l'unité (6) de diagnostic un compteur (T) de temps, qui démarre, lors de la mise en place du signal (11) d'erreur, conformée en outre pour interroger le compteur (T) de temps et pour agrandir, après avoir atteint un laps (ZS) de temps donné à l'avance, la tolérance (20) de position dans une mesure (M) pouvant être donnée à l'avance.

3. Système (1) de surveillance suivant la revendication 1 ou 2, comportant en outre au moins un projecteur (41, 42, 43, 44), qui est conformé pour projeter la surface (KF) du cercle ou la sphère (SP) sur un fond de la zone (FOV) de surveillance ou dans la zone (FOV) de surveillance, dans lequel l'unité (22) de prise de décision est conformée pour donner au projecteur (41, 42, 43, 44) les données de projection.

4. Système (1) de surveillance suivant la revendication 3, dans lequel le projecteur est conformé avec l'unité (22) de prise de décision pour projeter, lorsqu'il n'y a pas d'erreur, une première surface (K1) de cercle autour de l'indication (P) de position contrôlée de la personne (M) identifiée pour donner à la personne (M) identifiée un compte-rendu sur la sécurité de l'identification de sa position, en outre dans un cas d'erreur, pour projeter une deuxième surface (KF2) de cercle autour de la dernière indication (P) de position contrôlée, à l'aide de l'indication (EP) de position de remplacement de la personne (M) identifiée, afin de donner à la personne (M) identifiée un compte-rendu sur les positions, sur lesquelles la personne (M) peut passer encore dans un temps prévisible sans déclencher la fonction (24) de sécurité.

5. Procédé pour faire fonctionner un système (1) de surveillance pour l'identification de la position d'une personne (M), dans lequel, par un premier détecteur (2a) de personne, on donne par un premier canal (K1) une première indication (Pa) de position de la personne (M) identifiée dans une zone (FOV) de surveillance et par un deuxième détecteur (2b) de personne, on donne, par un deuxième canal (K2) une deuxième indication (Pb) de position de la personne (M) identifiée dans la zone (FOV) de surveillance, on contrôle la vraisemblance de la première indication (Pa) de position et de la deuxième indication (Pb) de position et, dans le cas où la première indication (Pa) de position et la deuxième indication (Pb) de position sont vraisemblables l'une par rapport à l'autre, on donne celle-ci comme une indication (P) de position contrôlée, en outre, dans le cas où le contrôle de vraisemblance échoue, on identifie une erreur et on donne le signal (11) d'erreur à la deuxième sortie (10), **caractérisé en ce qu'**au moyen d'une tolérance (20) de position pouvant être donnée à l'avance, dans le cas où le contrôle de vraisemblance échoue, on fixe l'indication (P) de position contrôlée en dernier comme un centre (MP) d'un cercle ou d'une sphère et la tolérance (20) de position comme rayon du cercle ou de la sphère et on calcule une surface (KF) de cercle ou une sphère (SP) en résultant, dans lequel les points de la surface (KF) du cercle ou de la sphère (SP) sont donnés comme indication (EP) de position de remplacement possible,
en outre, on indique, au moyen d'une liste (23) de machines, dans laquelle au moins pour une première machine (A1), on indique un site (PA1) de la machine et un rayon (R) de protection autour du site (PA1) de la machine, dans le cas de la surface (KF) de cercle, on évalue les points résultants de la ligne (KR) de cercle comme emplacements de séjour très défavorables de la personne (M) identifiée et dans le cas de la sphère, on évalue les points en résultant de la surface de la sphère comme des emplacements de séjour très défavorables de la personne (M) identifiée, avec les emplacements de séjour très défavorables et les données du site (PA1) de la machine avec son rayon (R) de protection, on détermine une distance (a) des emplacements de séjour très défavorables à une ligne (BGL) de démarcation ou à une surface (BGF) de démarcation formée par le rayon (R) de protection et si on passe en dessous d'une distance (am) minimum, on déclenche une fonction (24) de sécurité pour la machine (A1).

6. Procédé suivant la revendication 5, dans lequel on augmente la tolérance (20) de position en fonction du temps (t), à cet effet on fait démarrer un compteur (T) de temps, lors de la mise en place du signal (11) d'erreur, on interroge ensuite cycliquement le compteur de temps et, respectivement après avoir atteint un laps (ZS) de temps pouvant être donné à l'avance, on augmente la tolérance (20) de position dans une mesure pouvant être donnée à l'avance.

7. Procédé suivant la revendication 5 ou 6, dans lequel on fait fonctionner un projecteur (41, 42, 43, 44), de manière à projeter la surface (KF) du cercle ou la sphère (SP) sur un fond de la zone (FOV) de surveillance ou respectivement dans la zone (FOV) de surveillance.

8. Procédé suivant la revendication 7, dans lequel on alimente le projecteur (41, 42, 43, 44) en des données (PD) de projection, de manière à projeter, dans un cas sans erreur, une première surface (K1) de cercle autour de l'indication (P) de position contrôlée de la personne (M) identifiée et on donne ainsi à la personne (M) identifiée un message de compte-rendu sur l'identification sécurisée de sa position, en outre on projette, dans un cas d'erreur, une deuxième surface (K2) de cercle autour de la dernière indication (P) de position contrôlée à l'aide de l'indication (EP) de position de remplacement de la personne (M) identifiée, afin de donner à la personne (M) identifiée un compte-rendu sur les positions, sur lesquelles la personne (M) peut passer encore dans un temps prévisible sans déclencher la fonction (24) de sécurité.
